# DEMANDE DE BREVET EUROPEEN

(11) **EP 0 688 116 A1**
(43) Date de publication de la demande: **20.12.1995**
(21) Numéro de dépôt: 95201539.4
(22) Date de dépôt: 12.06.1995
(51) Int. Cl.: H04L 5/14

(54) **Procédé d'égalisation dans un système de transmission bidirectionelle**

(30) Priorité: 15.06.1994 FR 9407309
(71) Demandeur: LABORATOIRES D'ELECTRONIQUE PHILIPS, 94450 Limeil-Brévannes (FR); Philips Electronics N.V., 5621 BA Eindhoven (NL)
(72) Inventeur: Giorgi, Sabine, Société Civile S.P.I.D., F-75008 Paris (FR); Finco, Eric, Société Civile S.P.I.D., F-75008 Paris (FR)
(74) Mandataire: Landousy, Christian

(57) **Abrégé**

Système de transmission bidirectionnelle de données opérant sur un canal (3) ayant des caractéristiques stables ou lentement variables. A chaque extrémité du canal, il existe des moyens d'émission/réception (1) (2) comprenant des sources (11, 21), des moyens de modulation/démodulation (12, 13) (22, 23) et des moyens de traitement des données (16) (24-26). Au lieu d'effectuer une égalisation des signaux à chaque extrémité du canal, on remplace l'égalisation à l'une des extrémités par une préaccentuation (29) effectuée à l'autre extrémité avant l'émission des signaux. On allège ainsi le matériel à l'extrémité dépourvue d'égalisation. Application au cas d'une caméra reliée par câble à une unité centrale.

Application : Transmission bidirectionnelle de données.

## Description

L'invention concerne un système de transmission bidirectionnelle de données comprenant des premiers moyens d'émission/réception et des seconds moyens d'émission/réception qui s'échangent mutuellement des signaux de données à travers un canal qui déforme les signaux, les premiers moyens d'émission/réception comprenant des premiers moyens pour générer des premiers signaux de données à émettre, des premiers moyens de modulation/démodulation et des premiers moyens de traitement opérant en réception, les seconds moyens d'émission/réception comprenant des seconds moyens pour générer des seconds signaux de données à émettre, des seconds moyens de modulation/démodulation, des moyens d'égalisation pour égaliser, à la réception, les premiers signaux de données transmis par le canal et délivrer des signaux égalisés, et des seconds moyens de traitement pour traiter les signaux égalisés.

Il peut par exemple s'agir d'une caméra reliée par câble à une unité centrale de gestion.

Il est courant de relier une caméra de télévision à une unité centrale par un câble par exemple un câble dit "triax". La liaison est généralement bidirectionnelle et elle permet de transmettre des signaux vidéo, audio ou des données dans les deux directions. La caméra et l'unité centrale possèdent de ce fait des structures analogues. Une telle structure est par exemple celle décrite aux pages 36 et 37 du livre intitulé : "TELEINFORMATIQUE" de C. MACCHI et J.F. GUILBERT, Editeur DUNOD PARIS (1987). Selon cet art antérieur, ces structures comprennent :
- à l'émission :
   - une source de signaux à transmettre,
   - un modulateur,
- à la réception :
   - un démodulateur,
   - un égaliseur,
   - des moyens de post-traitement.

Or, il est souhaitable que la caméra, qui est un matériel mobile, soit la plus légère possible, l'unité centrale étant un matériel beaucoup plus lourd et de mobilité réduite.

Le but de l'invention est donc de chercher à alléger au maximum la caméra.

Ce but est atteint avec un système décrit dans le préambule dans lequel les seconds moyens d'émission/réception comprennent des moyens de préaccentuation qui préaccentuent, avant l'émission, les seconds signaux de données à émettre, de manière à compenser les déformations créées par le canal, pour fournir des seconds signaux de données préaccentués qui, après passage par le canal, sont aptes à être démodulés et traités par les premiers moyens de démodulation connectés en série avec les premiers moyens de traitement.

Ainsi avantageusement, en ajoutant les moyens de préaccentuation dans l'unité centrale, on supprime dans la caméra l'égaliseur servant à égaliser les signaux reçus par la caméra. On compense ainsi par avance les déformations ultérieures apportées par le canal. Les signaux reçus sont ainsi démodulés par le démodulateur de la caméra puis traités directement par les premiers moyens de traitement qui exploitent les données. La caméra est ainsi allégée du poids de l'égaliseur, les qualités de correction des déformations du canal restant semblables.

L'invention a son application dans le cas où le canal de transmission à des caractéristiques stables ou lentement variables permettant de considérer que les déformations des signaux provoquées dans un sens de transmission sont sensiblement les mêmes que celles provoquées dans l'autre sens de transmission un peu plus tard.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
Figure 1 : un système de transmission bidirectionnelle selon l'art connu.
Figure 2 : un système de transmission bidirectionnelle selon l'invention.

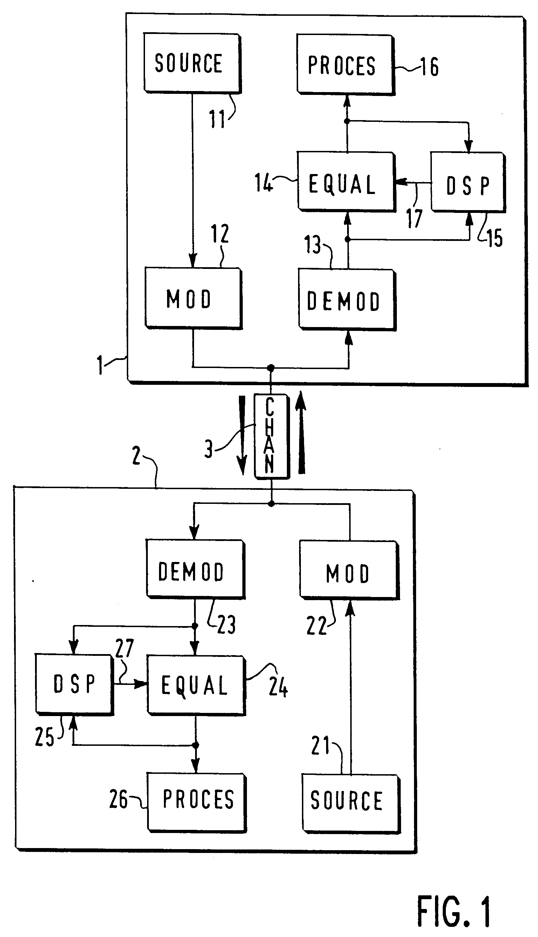

La figure 1 représente un système connu comprenant des premiers moyens 1 d'émission/réception et des seconds moyens 2 d'émission/réception de signaux de données qui passent à travers un canal 3 CHAN de transmission. Les premiers moyens 1 et les seconds moyens 2 possèdent une structure analogue.

Ils comprennent :
- A l'émission :
   - une source 11, 21 de données,
   - un modulateur 12, 22 pour moduler une porteuse à partir de ces données et émettre des signaux de données.
- A la réception :
   - un démodulateur 13, 23 pour démoduler les signaux de données reçus,
   - un égaliseur 14, 24 pour égaliser les signaux de données démodulés et les corriger des déformations introduites par le canal 3 de transmission,
   - une unité de traitement 16, 26 pour exploiter les signaux de données en sortie de l'égaliseur,
   - un processeur numérique 15, 25 pour déterminer des coefficients de l'égaliseur selon un algorithme classique.

Le processeur numérique 15, 25 détermine des coefficients adaptatifs en fonction des variations du canal et les charge (connexions 17, 27) dans l'égaliseur 14, 24.

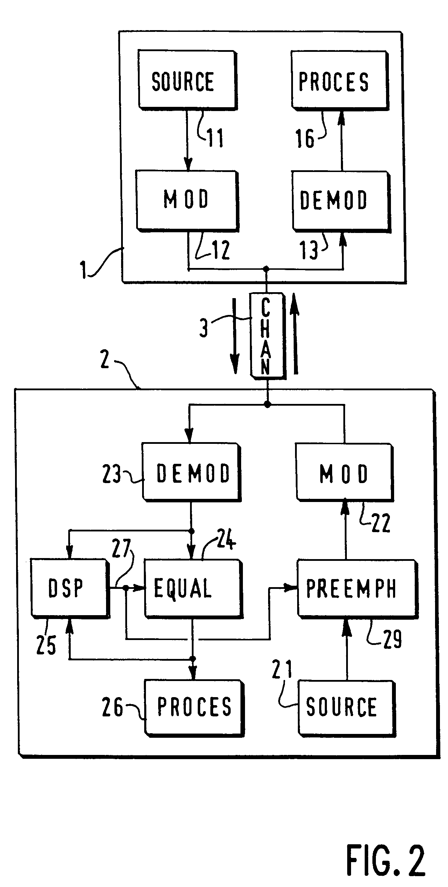

La figure 2 représente un système de transmission bidirectionnelle selon l'invention. Les mêmes éléments que ceux de la figure 1 disposent des mêmes repères.

En vue d'alléger les premiers moyens 1 d'émission/réception, l'invention supprime l'égaliseur 14 et le processeur numérique 15. Il n'y a alors plus d'égalisation dans les premiers moyens 1. On remplace cette égalisation par une préaccentuation effectuée avant l'émission des signaux de données, dans les seconds moyens 2 d'émission/réception.

Pour cela entre la source 21 et le modulateur 22, on insère des moyens 29 de pré-accentuation PREEMPH qui compensent les déformations qui vont arriver ensuite lors de la transmission par le canal 3. La connaissance des caractéristiques du canal est obtenue par le traitement d'égalisation effectué par l'égaliseur 24 et le processeur numérique 25 lors de la réception des signaux par les seconds moyens 2.

L'invention met à profit le cas où les variations du canal sont faibles pour des échanges rapprochés de signaux dans les deux sens de transmission du canal. L'égaliseur 24 et le processeur numérique 25 suivent les variations du canal. Le processeur numérique 25 charge dans les moyens 29 de pré-accentuation des coefficients d'adaptation déduits de ceux déterminés pour l'autre voie. Ces coefficients d'adaptation peuvent par exemple être les coefficients de l'égaliseur 24 qui sont copiés dans les moyens de préaccentuation PREEMPH. Les coefficients peuvent être copiés totalement ou partiellement. Il est aussi possible de leur faire subir un traitement préalable par exemple une opération de troncature ou une opération d'interpolation entre coefficients. Tout autre traitement permettant d'évaluer préalablement les déformations produites ultérieurement par le canal, peut également être appliqué.

Les premiers moyens 1 sont ainsi allégés tandis que les seconds moyens 2 deviennent plus importants. Cette situation est tout à fait favorable dans le cas où les premiers moyens 1 sont constitués d'une caméra reliée par un câble à des seconds moyens 2 constitués d'une unité centrale de gestion. Les caractéristiques du canal varient en effet très peu entre les deux sens de transmission au cours d'échanges rapprochés dans le temps.

## Revendications

1. Système de transmission bidirectionnelle de données comprenant des premiers moyens (1) d'émission/réception et des seconds moyens (2) d'émission/réception qui s'échangent mutuellement des signaux de données à travers un canal (3) qui déforme les signaux, les premiers moyens (1) d'émission/réception comprenant des premiers moyens (11) pour générer des premiers signaux de données à émettre, des premiers moyens de modulation (12)/démodulation (13) et des premiers moyens (16) de traitement opérant en réception, les seconds moyens (2) d'émission/réception comprenant des seconds moyens (21) pour générer des seconds signaux de données à émettre, des seconds moyens de modulation (22)/démodulation (23), des moyens (24, 25) d'égalisation pour égaliser, à la réception, les premiers signaux de données transmis par le canal et délivrer des signaux égalisés, et des seconds moyens de traitement (26) pour traiter les signaux égalisés, caractérisé en ce que les seconds moyens (2) d'émission/réception comprennent des moyens (29) de préaccentuation qui préaccentuent, avant l'émission, les seconds signaux de données à émettre, de manière à compenser les déformations créées par le canal (3), pour fournir des seconds signaux de données préaccentués qui, après passage par le canal, sont aptes à être démodulés et traités par les premiers moyens de démodulation (13) connectés en série avec les premiers moyens (16) de traitement.

2. Système selon la revendication 1 caractérisé en ce que les moyens de préaccentuation (29) comprennent un filtre ayant des coefficients qui sont mis à jour d'après des caractéristiques du canal déterminées par les moyens d'égalisation (24, 25).

3. Système selon les revendications 1 ou 2 caractérisé en ce que :
- les premiers moyens (1) d'émission/réception comprennent une caméra,
- les seconds moyens (2) d'émission/réception comprennent une unité centrale,
- le canal (3) réunissant la caméra à l'unité centrale étant formé d'un câble.
